# EUROPEAN PATENT APPLICATION

(11) **EP 4 542 273 A1**
(43) Date of publication of application: **23.04.2025**
(21) Application number: 24169150.0
(22) Date of filing: 09.04.2024
(51) Int. Cl.: G02B 6/293

(54) **OPTICAL WAVEGUIDE INTERFEROMETER WITH CONTROLLABLE LENGTH IMBALANCE AND MINIMUM BENDS**

(30) Priority: 20.10.2023 US 202318382174
(71) Applicant: II-VI Delaware, Inc., Wilmington, Delaware 19801 (US)
(72) Inventor: Melikyan, Argishti, Marlboro (NJ), 07746 (US); Dong, Po, Fremont (CA), 94536 (US); Chen, Jiashu, Los Altos (CA), 94022 (US)
(74) Representative: Forresters IP LLP

(57) **Abstract**

An optical waveguide interferometer includes an input section (102), a middle section (104), and an output section (106), where the optical waveguide interferometer further includes a first arm portion (108) having a first length that spans the input section (102), the middle section (104), and the output section (106), and a second arm portion (110) having a second length that spans the input section (102), the middle section (104), and the output section (106), where the first length of the first arm portion (108) is less than the second length of the second arm portion (110), and where the second arm portion (110) has a curved shape.

## Description

### BACKGROUND

### 1. Field

This disclosed subject matter relates generally to devices used in fiber-optic communication and, in some non-limiting embodiments, to a design for an optical waveguide interferometer that has controllable length imbalance and minimum bends.

### 2. Technical Considerations

Optical communication (e.g., optical telecommunication) may refer to a method of communication between two locations at a distance apart using light to carry information. An optical communication system may use a transmitter, which encodes a message into an optical signal, a channel, which carries the optical signal to its destination, and a receiver, which reproduces the message from the optical signal that is received by the receiver.

Fiber-optic communication may refer to a form of optical communication that involves transmitting information from one place to another by sending pulses of light (e.g., infrared light) through an optical fiber. The light may be used as a form of carrier wave that is modulated to carry the information. Optical fiber may be preferred over electrical cabling in specific situations, such as when high bandwidth, long distance, and/or immunity to electromagnetic interference is required. Fiber-optic communication can transmit voice, video, and telemetry through local area networks or across long distances.

An interferometer may refer to a device in which the interference of two beams of light is used to provide information (e.g., in the form of measurements, signals, etc.). In optical communication, an interferometer may be used as an electro-optic modulator for phase and/or amplitude modulation of light. In some instances, a delay line interferometer (DLI), which may include a Mach-Zehnder interferometer or a Michelson interferometer, may involve the use of a beam of light that is time-delayed as compared to another beam of light by a desired interval of time. A DLI may be referred to as an optical differential phase shift keying (DPSK) demodulator, such that the DLI may convert a phase-keyed signal into an amplitude-keyed signal. In such an instance, an incoming DPSK optical signal may be split into two equal-intensity beams at an input of the two arms of the DLI. In this way, one beam is delayed by a difference in the optical paths of the two arms, which may correspond to 1-bit time delay. Following recombination of the two equal-intensity beams at an output of the two arms of the DLI, the beams may interfere with each other constructively or destructively. The resultant interference intensity may be used as a signal that carried information, such as an intensity-keyed signal.

### SUMMARY

Accordingly, it is an object of the presently disclosed subject matter to provide an optical waveguide interferometer that overcomes some or all of the deficiencies of the prior art.

According to non-limiting embodiments, provided is an optical waveguide interferometer, comprising: an input section; a middle section; an output section; a first arm portion having a first length that spans the input section, the middle section, and the output section; and a second arm portion having a second length that spans the input section, the middle section, and the output section; wherein the first length of the first arm portion is less than the second length of the second arm portion; and wherein the second arm portion has a curved shape.

According to non-limiting embodiments, provided is an optical waveguide interferometer, comprising: a first stage comprising: a first input section; a first middle section; and a first output section; wherein the first stage further comprises: a first short arm portion that spans the first input section, the first middle section, and the first output section; and a first long arm portion that spans the first input section, the first middle section, and the first output section; wherein a span of the first short arm portion in the first middle section is shorter than a span of the first long arm portion in the first middle section; and wherein the first long arm portion has a first curved shape; a second stage comprising: a second input section; a second middle section; and a second output section; wherein the second stage further comprises: a second short arm portion that spans the second input section, the second middle section, and the second output section; and a second long arm portion that spans the second input section, the second middle section, and the second output section; wherein a span of the second short arm portion in the second middle section is shorter than a span of the second long arm portion in the second middle section; wherein the second long arm portion has a second curved shape; and wherein the first output section of the first stage is coupled to the second input section of the second stage.

According to non-limiting embodiments, provided is an optical waveguide interferometer, comprising: a first stage comprising: a first input section; a first middle section; and a first output section; wherein the first stage further comprises: a first short arm portion that spans the first input section, the first middle section, and the first output section; and a first long arm portion that spans the first input section, the first middle section, and the first output section; wherein a span of the first short arm portion in the first middle section is shorter than a span of the first long arm portion in the first middle section; and wherein the first long arm portion has a first curved shape; a second stage comprising: a second input section; a second middle section; and a second output section; wherein the second stage further comprises: a second short arm portion that spans the second input section, the second middle section, and the second output section; and a second long arm portion that spans the second input section, the second middle section, and the second output section; wherein a span of the second short arm portion in the second middle section is shorter than a span of the second long arm portion in the second middle section; wherein the second long arm portion has a second curved shape; wherein the first output section of the first stage is coupled to the second input section of the second stage; and wherein the first output section of the first stage is not parallel to the second input section of the second stage.

Further embodiments are set forth in the following numbered clauses:

Clause 1: An optical waveguide interferometer, comprising: an input section; a middle section; an output section; a first arm portion having a first length that spans the input section, the middle section, and the output section; and a second arm portion having a second length that spans the input section, the middle section, and the output section; wherein the first length of the first arm portion is less than the second length of the second arm portion; and wherein the second arm portion has a curved shape.

Clause 2: The optical waveguide interferometer of clause 1, wherein the first arm portion has a first bend at a transition of the first arm portion between the input section and the middle section; and wherein the second arm portion has a second bend at a transition of the second arm portion between the input section and the middle section.

Clause 3: The optical waveguide interferometer of clause 1 or 2, wherein the first arm portion has a third bend at a transition of the first arm portion between the middle section and the output section; and wherein the second arm portion has a fourth bend at a transition of the second arm portion between the middle section and the output section.

Clause 4: The optical waveguide interferometer of any of clauses 1-3, wherein a first angle is defined by the first arm portion after the first bend at the transition of the first arm portion between the input section and the middle section and the second arm portion at the transition of the second arm portion between the input section and the middle section after the second bend; and wherein a second angle is defined by the first arm portion before the third bend at the transition of the first arm portion between the middle section and the output section and the second arm portion before the fourth bend at the transition of the second arm portion between the middle section and the output section; and wherein the first angle and the second angle are equal.

Clause 5: The optical waveguide interferometer of any of clauses 1-4, wherein the first arm portion has a first bend at a transition of the first arm portion between the input section and the middle section; and wherein the first arm portion extends in a straight line to a third bend at a transition between the middle section and the output section.

Clause 6: The optical waveguide interferometer of any of clauses 1-5, wherein the first arm portion at the input section is parallel to the second arm portion at the input section.

Clause 7: The optical waveguide interferometer of any of clauses 1-6, wherein the first arm portion at the output section is parallel to the second arm portion at the output section.

Clause 8: The optical waveguide interferometer of any of clauses 1-7, wherein the first arm portion has a first bend at a transition of the first arm portion between the input section and the middle section; wherein the second arm portion has a second bend at a transition of the second arm portion between the input section and the middle section; and wherein the first arm portion before the first bend at the input section is parallel to the second arm portion before the second bend at the input section.

Clause 9: The optical waveguide interferometer of any of clauses 1-8, wherein the first arm portion has a third bend at a transition of the first arm portion between the middle section and the output section; wherein the second arm portion has a fourth bend at a transition of the second arm portion between the middle section and the output section; and wherein the first arm portion after the third bend at the output section is parallel to the second arm portion after the fourth bend at the output section.

Clause 10: The optical waveguide interferometer of any of clauses 1-9, wherein a span of the first arm portion in the middle section has a width that is different than a width of a span of the second arm portion in the middle section.

Clause 11: The optical waveguide interferometer of any of clauses 1-10, wherein a first span of the first arm portion in the middle section has a width that is different than a width of a second span of the first arm portion in the middle section.

Clause 12: The optical waveguide interferometer of any of clauses 1-11, wherein a first span of the second arm portion in the middle section has a width that is different than a width of a second span of the second arm portion in the middle section.

Clause 13: The optical waveguide interferometer of any of clauses 1-12, wherein the input section is a first input section of a first stage, wherein the middle section is a first middle section of the first stage, and wherein the output section is a first output section of the first stage, and the optical waveguide interferometer further comprises: a second stage, wherein the second stage comprises: a second input section; a second middle section; a second output section; and wherein the first output section of the first stage is coupled to the second input section of the second stage.

Clause 14: An optical waveguide interferometer, comprising: a first stage comprising: a first input section; a first middle section; and a first output section; wherein the first stage further comprises: a first short arm portion that spans the first input section, the first middle section, and the first output section; and a first long arm portion that spans the first input section, the first middle section, and the first output section; wherein a span of the first short arm portion in the first middle section is shorter than a span of the first long arm portion in the first middle section; and wherein the first long arm portion has a first curved shape; a second stage comprising: a second input section; a second middle section; and a second output section; wherein the second stage further comprises: a second short arm portion that spans the second input section, the second middle section, and the second output section; and a second long arm portion that spans the second input section, the second middle section, and the second output section; wherein a span of the second short arm portion in the second middle section is shorter than a span of the second long arm portion in the second middle section; wherein the second long arm portion has a second curved shape; and wherein the first output section of the first stage is coupled to the second input section of the second stage.

Clause 15: The optical waveguide interferometer of clause 14, wherein the first short arm portion has a first bend at a transition of the first short arm portion between the first input section and the first middle section; wherein the first long arm portion has a second bend at a transition of the first long arm portion between the first input section and the first middle section; wherein the first short arm portion has a third bend at a transition of the first short arm portion between the first middle section and the first output section; wherein the first long arm portion has a fourth bend at a transition of the first long arm portion between the first middle section and the first output section; wherein a first angle is defined by the first short arm portion after the first bend and the first long arm portion after the second bend; wherein a second angle is defined by the first short arm portion before the third bend and the first long arm portion before the fourth bend; wherein the first angle and the second angle are equal; wherein the second short arm portion has a fifth bend at a transition of the second short arm portion between the second input section and the second middle section; wherein the second long arm portion has a sixth bend at a transition of the second long arm portion between the second input section and the second middle section; wherein the second short arm portion has a seventh bend at a transition of the second short arm portion between the second middle section and the second output section; wherein the second long arm portion has an eighth bend at a transition of the second long arm portion between the second middle section and the second output section; wherein a third angle is defined by the second short arm portion after the fifth bend and the second long arm portion after the sixth bend; wherein a fourth angle is defined by the second short arm portion before the seventh bend and the second long arm portion before the eighth bend; and wherein the third angle and the fourth angle are equal.

Clause 16: The optical waveguide interferometer of clauses 14 or 15, wherein the first short arm portion has a first bend at a transition of the first short arm portion between the first input section and the first middle section; wherein the first short arm portion extends in a straight line to a third bend at a transition between the first middle section and the first output section; wherein the second short arm portion has a fifth bend at a transition of the second short arm portion between the second input section and the second middle section; and wherein the second short arm portion extends in a straight line to a seventh bend at a transition between the second middle section and the second output section.

Clause 17: The optical waveguide interferometer of any of clauses 14-16, wherein a span of the first short arm portion in the first middle section has a width that is different than a width of a span of the first long arm portion in the first middle section; and wherein a span of the second short arm portion in the second middle section has a width that is different than a width of a span of the second long arm portion in the second middle section.

Clause 18: The optical waveguide interferometer of any of clauses 14-17, wherein a first span of the first short arm portion in the first middle section has a width that is different than a width of a second span of the first short arm portion in the first middle section; and wherein a third span of the second short arm portion in the second middle section has a width that is different than a width of a fourth span of the second short arm portion in the second middle section.

Clause 19: The optical waveguide interferometer of any of clauses 14-18, wherein a first span of the first long arm portion in the first middle section has a width that is different than a width of a second span of the first long arm portion in the first middle section; and wherein a third span of the second long arm portion in the second middle section has a width that is different than a width of a fourth span of the second long arm portion in the second middle section.

Clause 20: An optical waveguide interferometer, comprising: a first stage comprising: a first input section; a first middle section; and a first output section; wherein the first stage further comprises: a first short arm portion that spans the first input section, the first middle section, and the first output section; and a first long arm portion that spans the first input section, the first middle section, and the first output section; wherein a span of the first short arm portion in the first middle section is shorter than a span of the first long arm portion in the first middle section; and wherein the first long arm portion has a first curved shape; a second stage comprising: a second input section; a second middle section; and a second output section; wherein the second stage further comprises: a second short arm portion that spans the second input section, the second middle section, and the second output section; and a second long arm portion that spans the second input section, the second middle section, and the second output section; wherein a span of the second short arm portion in the second middle section is shorter than a span of the second long arm portion in the second middle section; wherein the second long arm portion has a second curved shape; wherein the first output section of the first stage is coupled to the second input section of the second stage; and wherein the first output section of the first stage is not parallel to the second input section of the second stage.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter. As used in the specification and the claims, the singular forms of "a," "an," and "the" include plural referents unless the context clearly dictates otherwise.

### BRIEF DESCRIPTION OF THE DRAWINGS

Additional advantages and details of the disclosed subject matter are explained in greater detail below with reference to the exemplary embodiments that are illustrated in the accompanying figures, in which:
FIG. 1 is a diagram of a non-limiting embodiment of an optical waveguide interferometer;
FIG. 2 is a diagram illustrating a curved shape of a second arm portion of a non-limiting embodiment of an optical waveguide interferometer;
FIG. 3 is a diagram of a non-limiting embodiment of an optical waveguide interferometer having multiple stages;
FIG. 4 is a diagram of another non-limiting embodiment of an optical waveguide interferometer having multiple stages;
FIG. 5 is a diagram of another non-limiting embodiment of an optical waveguide interferometer; and
FIG. 6 is a diagram of a non-limiting embodiment of an optical waveguide interferometer having multiple stages.

### DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments of the disclosed subject matter. Hence, specific dimensions and other physical characteristics related to the embodiments disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

In some non-limiting embodiments, a sequence of 90 degree bends of optical fibers (e.g., which act as waveguides) may be used to define the arms of a delay line interferometer (DLI), to keep a number of bends the same in both arms of the DLI and to have a specific length imbalance as desired. However, depending on a particular application, such as a DLI on a planar photonic integrated circuit, it may be important to have a DLI with an overall compact size, which may be determined based on specific arm lengths, and minimum excess bending (e.g., a minimum number of turns, turns without sharp bends, etc.) to allow for proper routing of optical signals. Any extra waveguides introduced in the arms of the DLI may increase a risk of getting a response that is detuned because of design and/or manufacturing variations.

According to non-limiting embodiments of the present disclosure, an optical waveguide interferometer may include an input section, a middle section, and an output section, wherein the optical waveguide interferometer further includes a first arm portion having a first length that spans the input section, the middle section, and the output section, and a second arm portion having a second length that spans the input section, the middle section, and the output section, where the first length of the first arm portion is less than the second length of the second arm portion, and wherein the second arm portion has a curved shape (e.g., a curved shape that has a degree of bending that is less than 90 degrees).

In some non-limiting embodiments, the first arm portion may have a first bend at a transition of the first arm portion between the input section and the middle section, and the second arm portion may have a second bend at a transition of the second arm portion between the input section and the middle section. In some non-limiting embodiments, the first arm portion has a third bend at a transition of the first arm portion between the middle section and the output section, and the second arm portion has a fourth bend at a transition of the second arm portion between the middle section and the output section. In some non-limiting embodiments, a first angle is defined by the first arm portion after the first bend at the transition of the first arm portion between the input section and the middle section and the second arm portion at the transition of the second arm portion between the input section and the middle section after the second bend, and a second angle is defined by the first arm portion before the third bend at the transition of the first arm portion between the middle section and the output section and the second arm portion before the fourth bend at the transition of the second arm portion between the middle section and the output section. In some non-limiting embodiments, the first angle and the second angle are equal.

In some non-limiting embodiments, the first arm portion has a first bend at a transition of the first arm portion between the input section and the middle section and the first arm portion extends in a straight line to a third bend at a transition between the middle section and the output section. In some non-limiting embodiments, the first arm portion at the input section is parallel to the second arm portion at the input section. In some non-limiting embodiments, the first arm portion at the output section is parallel to the second arm portion at the output section. In some non-limiting embodiments, the first arm portion has a first bend at a transition of the first arm portion between the input section and the middle section, the second arm portion has a second bend at a transition of the second arm portion between the input section and the middle section, and the first arm portion before the first bend at the input section is parallel to the second arm portion before the second bend at the input section. In some non-limiting embodiments, the first arm portion has a third bend at a transition of the first arm portion between the middle section and the output section, the second arm portion has a fourth bend at a transition of the second arm portion between the middle section and the output section, and the first arm portion after the third bend at the output section is parallel to the second arm portion after the fourth bend at the output section.

In some non-limiting embodiments, a span of the first arm portion in the middle section has a width that is different than a width of a span of the second arm portion in the middle section. In some non-limiting embodiments, a first span of the first arm portion in the middle section has a width that is different than a width of a second span of the first arm portion in the middle section. In some non-limiting embodiments, a first span of the second arm portion in the middle section has a width that is different than a width of a second span of the second arm portion in the middle section. In some non-limiting embodiments, the input section is a first input section of a first stage, wherein the middle section is a first middle section of the first stage, and wherein the output section is a first output section of the first stage. In some non-limiting embodiments, the optical waveguide interferometer may further include a second stage that may include a second input section, a second middle section, a second output section, and the first output section of the first stage is coupled to the second input section of the second stage.

In this way, the optical waveguide interferometer may allow for a design to have a compact size that is appropriate for a particular application, such as a planar photonic integrated circuit. In addition, the optical waveguide interferometer may allow for minimum excess bending (e.g., a minimum number of turns, turns without sharp bends, etc.) to allow for proper routing of optical signals through the optical waveguide interferometer that reduces attenuation, undesired interference, and minimizes signal loss. In addition, a shape of arm portions may have a size and configuration that allows for a compact design for a particular application, such as a finite impulse response (FIR) lattice filter.

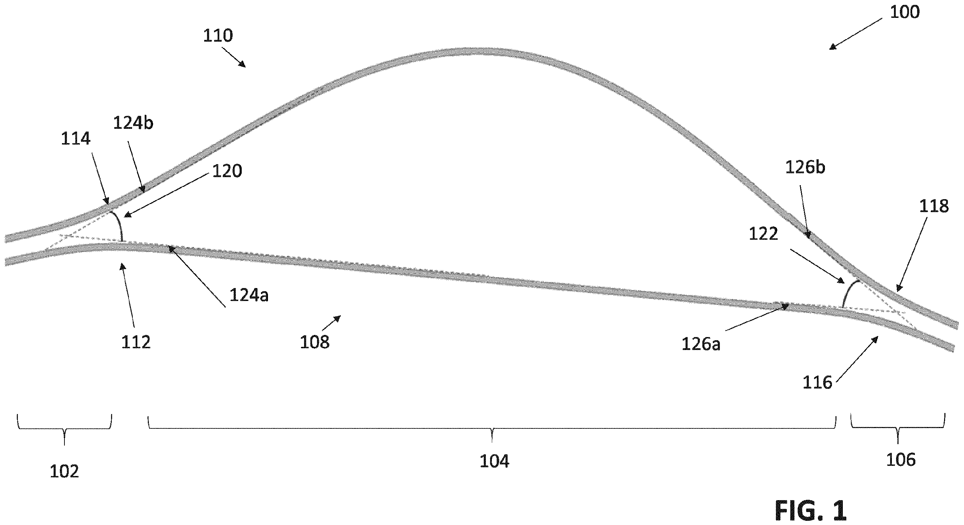

Referring now to FIG. 1, FIG. 1 is a diagram of a non-limiting embodiment of optical waveguide interferometer 100. As shown in FIG. 1, optical waveguide interferometer 100 may include input section 102, middle section 104, and output section 106. As further shown in FIG. 1, optical waveguide interferometer 100 may include a short arm portion, referred to as first arm portion 108, that spans input section 102, middle section 104, and output section 106, and a long arm portion, referred to as second arm portion 110, that spans input section 102, middle section 104, and output section 106. Short arm portion may have a length that is shorter than a length of long arm portion. In some non-limiting embodiments, a length of first arm portion 108 is less than a length of second arm portion 110. In some non-limiting embodiments, optical waveguide interferometer 100 may have a length (e.g., as measured from input section 102 to output section 106) of between about 175µm-200µm and a width (e.g., as measured from a topmost point of second arm portion 110 to a point that is orthogonal to the topmost point on first arm portion 108) of about 50µm-60µm. In some non-limiting embodiments, second arm portion 110 has a curved shape. For example, a part of second arm portion 110 that spans middle section 104 of optical waveguide interferometer 100 may have a curved shape. In some non-limiting embodiments, the curved shape may be a shape that has a degree of bending that is less than 90 degrees.

In some non-limiting embodiments, a part of second arm portion 110 (e.g., a part of second arm portion 110 that spans middle section 104 of optical waveguide interferometer 100) may have a curved shape that is planar to (e.g., in the same plane as) a part of first arm portion 108 (e.g., a part of first arm portion 108 that spans middle section 104 of optical waveguide interferometer 100). For example, a part of second arm portion 110 may extend in two dimensions in the same way in which a part of first arm portion 108 may extend.

In some non-limiting embodiments, a part of second arm portion 110 may have a shape (e.g., a curved shape) that is not in the same plane as a part of first arm portion 108. For example, a part of second arm portion 110 that spans middle section 104 may be positioned in a plane that is orthogonal to a plane in which a part of first arm portion 108 that spans middle section 104 is positioned. In some non-limiting embodiments, a part of second arm portion 110 and/or a part of first arm portion 108 may have a three-dimensional configuration.

In some non-limiting embodiments, first arm portion 108 may have first bend 112 between input section 102 and middle section 104. For example, first arm portion 108 may have first bend 112 at a transition of first arm portion 108 between input section 102 and middle section 104. In some non-limiting embodiments, second arm portion 110 may have second bend 114 between input section 102 and middle section 104.

In some non-limiting embodiments, first arm portion 108 may have third bend 116 between middle section 104 and output section 106. For example, first arm portion 108 may have third bend 116 at a transition of first arm portion 108 between middle section 104 and output section 106. In some non-limiting embodiments, second arm portion 110 may have fourth bend 118 between middle section 104 and output section 106. For example, second arm portion may have fourth bend 118 at a transition of second arm portion 110 between middle section 104 and output section 106.

As further shown in FIG. 1, an opening angle, shown as first angle 120, is defined by (e.g., between) first arm portion 108 (e.g., a part of first arm portion 108 after second bend 114 at the transition of first arm portion 108 between input section 102 and middle section 104) and second arm portion 110 (e.g., a part of second arm portion 110 at the transition of second arm portion 110 between input section 102 and middle section 104 after second bend 114) adjacent input section 102. For example, first arm portion 108 after first bend 112 at the transition of first arm portion 108 between input section 102 and middle section 104 and second arm portion 110 at the transition of second arm portion 110 between input section 102 and middle section 104 after second bend 114 form first angle 120. In some non-limiting embodiments, first angle 120 may be in a range of about 5-70 degrees.

In some non-limiting embodiments, first angle 120 may be defined based on an angle between two lines, such as lines 124a and 124b. In some non-limiting embodiments, line 124a may be a line that is parallel to and along first arm portion 108 (e.g., concentric with first arm portion 108, along an inside edge of first arm portion 108, etc.). In some non-limiting embodiments, line 124b may be a line that is tangential to an inflection point in second arm portion 110. For example, line 124b may be a line that is tangential to a point where a shape of second arm portion transition from positive curvature to negative curvature or vice versa. In another example, line 124b may be a line that is tangential to a point where a shape of second arm portion transition from positive curvature or negative curvature to no curvature (e.g., zero curvature).

As further shown in FIG. 1, a closing angle, shown as second angle 122, is defined by first arm portion 108 (e.g., a part of first arm portion 108 before fourth bend 118 at the transition of first arm portion 108 between middle section 104 and output section 106) and second arm portion 110 (e.g., a part of second arm portion 110 before fourth bend 118 at the transition of second arm portion 110 between middle section 104 and output section 106) adjacent output section 106. For example, first arm portion 108 after third bend 116 at the transition of first arm portion 108 between middle section 104 and output section 106 and second arm portion 110 at the transition of second arm portion 110 between middle section 104 and output section 106 after fourth bend 118 form second angle 122. In some non-limiting embodiments, second angle 122 may be in a range of about 5-70 degrees.

In some non-limiting embodiments, first angle 122 may be defined based on an angle between two lines, such as lines 126a and 126b. In some non-limiting embodiments, line 126a may be a line that is parallel to and along first arm portion 108 (e.g., concentric with first arm portion 108, along an inside edge of first arm portion 108, etc.). In some non-limiting embodiments, line 126b may be a line that is tangential to an inflection point in second arm portion 110. For example, line 126b may be a line that is tangential to a point where a shape of second arm portion transition from positive curvature to negative curvature or vice versa. In another example, line 126b may be a line that is tangential to a point where a shape of second arm portion transition from positive curvature or negative curvature to no curvature (e.g., zero curvature).

In some non-limiting embodiments, first angle 120 and second angle 122 may be equal. In some non-limiting embodiments, first angle 120 and/or second angle 122 may be sized and configured to achieve a specific length imbalance between first arm portion 108 and second arm portion 110.

In some non-limiting embodiments, first arm portion 108 extends in a straight line along middle section 104. For example, first arm portion 108 extends in a straight line from first bend 112 at a transition of first arm portion 108 between input section 102 and middle section 104 to third bend 116 at a transition between middle section 104 and output section 106. In some non-limiting embodiments, a part of first arm portion 108 may be parallel to (e.g., may extend in a direction parallel to) a part of second arm portion 110. For example, first arm portion 108 may be parallel to second arm portion 110 at input section 102. In another example, first arm portion 108 may be parallel to second arm portion 110 at output section 106.

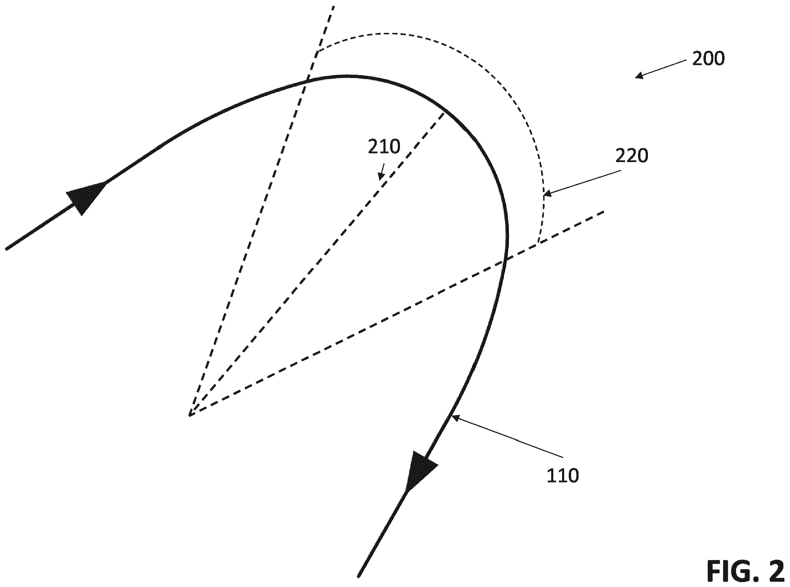

Referring now to FIG. 2, FIG. 2 is a diagram illustrating a curved shape of second arm portion 110 of optical waveguide interferometer 200. As shown in FIG. 2, second arm portion 110 can be curved to create a longer path length than a path of first arm portion 108. In one example, a Bezier curve with an adiabatic transition from straight to bend curvature may be used for the curved shape of second arm portion 110. In some non-limiting embodiments, bending radius 210 of the curved shape (e.g., a waveguide curve) may start with a straight section or a bend with a very large bending radius which then reaches to a critical value (e.g., about 100µm) in the middle of the bend. In some non-limiting embodiments, the curved shape may be a shape that has degree of bending 220 that is less than 90 degrees. In one example, the curved shape may be a shape that has degree of bending 220 that is about 49 degrees (e.g., 49.8484375 degrees). In another example, the curved shape may be a shape that has degree of bending 220 that is about 69 degrees (e.g., 69.57890625 degrees).

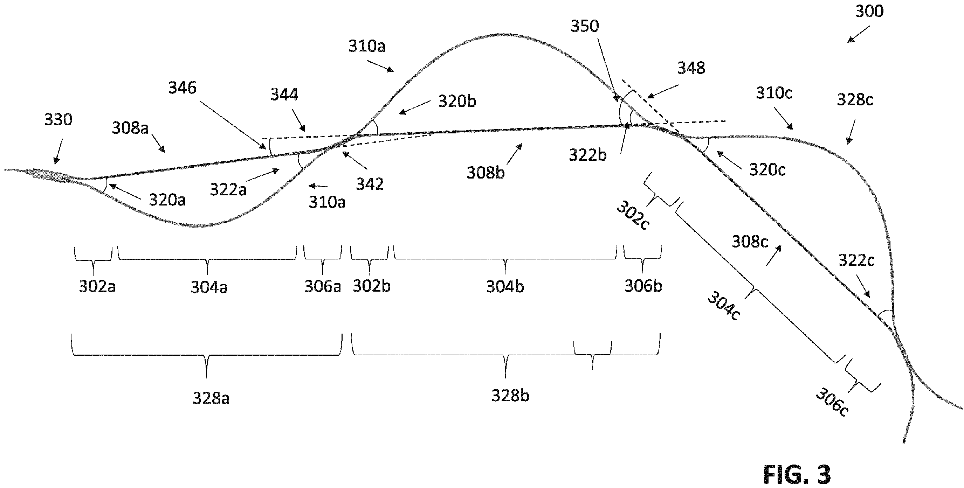

Referring now to FIG. 3, FIG. 3 is a diagram of a non-limiting embodiment of optical waveguide interferometer 300 with multiple stages. As shown in FIG. 3, optical waveguide interferometer 300 may include first stage 328a, second stage 328b, and third stage 328c. In some non-limiting embodiments, one or more stages of first stage 328a, second stage 328b, and third stage 328c may be the same as or similar to optical waveguide interferometer 100. For example, one or more stages of first stage 328a, second stage 328b, and third stage 328c may include the same or similar components as optical waveguide interferometer 100, as described with regard to FIG. 1. In some non-limiting embodiments, one or more stages of first stage 328a, second stage 328b, and third stage 328c may be sized and configured in the same fashion. For example, first stage 328a, second stage 328b, and third stage 328c may have the same size and configuration.

As further shown in FIG. 3, first stage 328a may include first input section 302a, first middle section 304a, and first output section 306a; second stage 328b may include second input section 302b, second middle section 304b, and second output section 306b; and third stage 328c may include third input section 302c, third middle section 304c, and third output section 306c. As further shown in FIG. 3, first output section 306a of first stage 328a may be connected to (e.g., coupled to) second input section 302b of second stage 328b, and second output section 306b of second stage 328b may be connected to third input section 302c of third stage 328c. Additional stages may be connected in the same or similar fashion. As further shown in FIG. 3, optical coupler device 330 may be connected to first input section 302a of first stage 328a. In some non-limiting embodiments, optical coupler device 330 may include a device capable of distributing an optical signal from one optical fiber (e.g., or waveguide) to among two or more optical fibers (e.g., two or more waveguides) and/or combining the optical signal from two or more optical fibers into a single optical fiber. In some non-limiting embodiments, optical coupler device 330 may include a fiber optic coupler (e.g., an optical fiber coupler) and/or other like devices. In some non-limiting embodiments, optical coupler device 330 is designed and/or fabricated in the same way as first arm portion 108 and second arm portion 110 of optical waveguide interferometer 100.

As further shown in FIG. 3, first angle 320a of first stage 328a is defined by first arm portion 308a and second arm portion 310a adjacent first input section 302a, and second angle 322a of first stage 328a is defined by first arm portion 308a and second arm portion 310a adjacent output section 306a. As further shown in FIG. 3, second stage 328b and third stage 328c may include first angles 320b, 320c, and second angles 322b, 322c, respectively, as well. In some non-limiting embodiments, first angles 320a, 320b, 320c, and second angles 322a, 322b, 322c, may be sized and configured in the same or similar fashion as first angle 120 and second angle 122, respectively, as shown and described with regard to FIG. 1. In some non-limiting embodiments, first angles 320a, 320b, 320c, and second angles 322a, 322b, 322c may be equal. In some non-limiting embodiments, each set of angles for a given stage may be equal, but may be different with regard to one stage compared to another stage. For example, first angle 320a and second angle 322a may be equal to each other, and first angle 320b and second angle 320b may be equal to each other, and first angle 320a and/or second angle 322a may be different than first angle 320b and second angle 320b.

As further shown in FIG. 3, first axis 342 is shown as being along (e.g., concentric with) first arm portion 308a of first stage 328a, and second axis 344 is shown as being along first arm portion 308b of second stage 328b. In some non-limiting embodiments, first stage angle 346 may be defined by first axis 342 and second axis 344. In some non-limiting embodiments, first stage angle 346 may provide a degree of alignment between first stage 328a and second stage 328b.

As further shown in FIG. 3, an orientation of first stage 328a may be opposite (e.g., flipped) as compared to an orientation of second stage 328b. For example, second arm portion 310a of first stage 328a may be positioned on a first side of first arm portion 308a, and/or first arm portion 308b and second arm portion 310b of second stage 328b may be positioned on a second side of first arm portion 308a and/or first arm portion 308b, where the first side and the second side are generally opposite each other with regard to first arm portion 308a and/or first arm portion 308b.

As further shown in FIG. 3, third axis 348 is shown as being along first arm portion 308c of third stage 328c. In some non-limiting embodiments, second stage angle 350 may be defined by second axis 344 and third axis 348. In some non-limiting embodiments, second stage angle 350 may provide a degree of alignment between second stage 328b and third stage 328c. In some non-limiting embodiments, first stage angle 346 and second stage angle 350 may be equal. In some non-limiting embodiments, first stage angle 346 and second stage angle 350 may be different. In some non-limiting embodiments, first stage angle 346 and second stage angle 350 may be selected to provide a predetermined form factor for optical waveguide interferometer 300. In this way, a size and configuration of optical waveguide interferometer 300 may be determined based on first stage angle 346 and second stage angle 350. Additionally or alternatively, a size and configuration of optical waveguide interferometer 300 may be determined based on the orientation (e.g., an orientation that is relative regarding one stage and another stage) of first stage 328a, second stage 328b, and/or third stage 328c. Additionally or alternatively, a size and configuration of optical waveguide interferometer 300 may be determined based on first angles 320a, 320b, 320c, and second angles 322a, 322b, 322c.

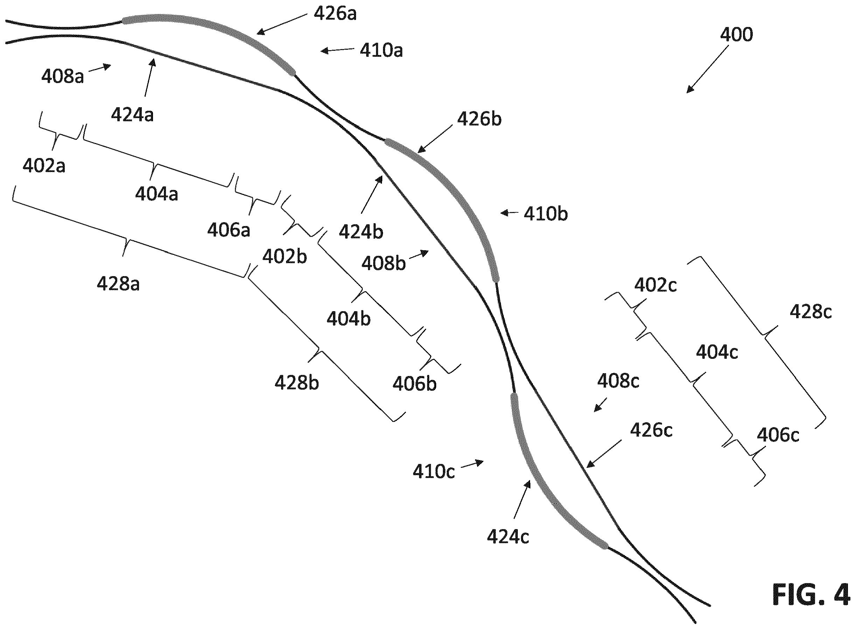

Referring now to FIG. 4, FIG. 4 is a diagram of a non-limiting embodiment of optical waveguide interferometer 400. As shown in FIG. 4, optical waveguide interferometer 400 may include first stage 428a, second stage 428b, and third stage 428c. In some non-limiting embodiments, one or more stages of first stage 428a, second stage 428b, and third stage 428c may be the same as or similar to optical waveguide interferometer 100 or optical waveguide interferometer 300 (e.g., one or more stages of optical waveguide interferometer 300). For example, one or more stages of first stage 428a, second stage 428b, and third stage 428c may include the same or similar components as optical waveguide interferometer 100, as described with regard to FIG. 1 or optical waveguide interferometer 300, as described with regard to FIG. 3. In some non-limiting embodiments, one or more stages of first stage 428a, second stage 428b, and third stage 428c may be sized and configured in the same fashion. For example, first stage 428a, second stage 428b, and third stage 428c may have the same size and configuration.

As further shown in FIG. 4, first stage 428a may include first input section 402a, first middle section 404a, and first output section 406a; second stage 428b may include second input section 402b, second middle section 404b, and second output section 406b; and third stage 428c may include third input section 402c, third middle section 404c, and third output section 406c. As further shown in FIG. 4, first output section 406a of first stage 428a may be connected to (e.g., coupled to) second input section 402b of second stage 428b, and second output section 406b of second stage 428b may be connected to third input section 402c of third stage 428c. As further shown in FIG. 4, first arm portion 408a of first stage 428a may include span 424a, second arm portion 410a of first stage 428a may include span 426a, first arm portion 408b of second stage 428b may include span 424b, second arm portion 410b of second stage 428b may include span 426b, first arm portion 408c of third stage 428c may include span 424c, and second arm portion 410c of third stage 428c may include span 426c.

As further shown in FIG. 4, span 424a of first arm portion 408a may have a first width (e.g., a first predetermined width), and span 426a of second arm portion 410a may have a second width. In some non-limiting embodiments, the first width of span 424a of first arm portion 408a may be different than the second width of span 426a of second arm portion 410a. In one example, the first width of span 424a of first arm portion 408a may be smaller than the second width of span 426a of second arm portion 410a. In another example, the first width of span 424a of first arm portion 408a may be larger than the second width of span 426a of second arm portion 410a. In some non-limiting embodiments, span 424a of first arm portion 408a may have the first width that extends along one or more sections (e.g., only one section, a plurality of sections, etc.) of first input section 402a, first middle section 404a, and/or first output section 406a of first stage 428a. For example, span 424a of first arm portion 408a may be positioned in first middle section 404a. In some non-limiting embodiments, span 426a of second arm portion 410a may have the second width that extends along one or more sections of first input section 402a, first middle section 404a, and/or first output section 406a of first stage 428a. For example, span 426a of second arm portion 410a may be positioned in first middle section 404a. Additionally or alternatively, span 424b and/or span 424c may be the same as or similar to (e.g., may have the same characteristics regarding width, positioning, etc.) span 424a. Additionally or alternatively, span 426b and/or span 426c may be the same as or similar to span 426a.

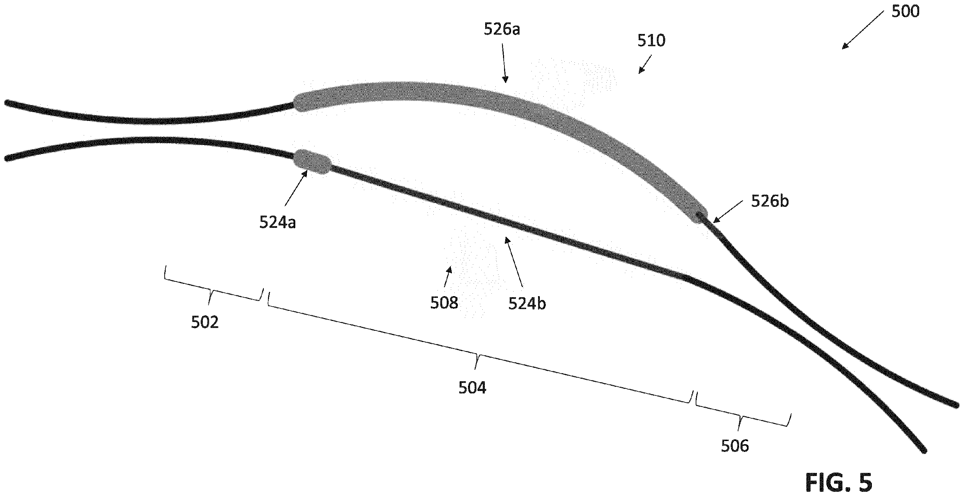

Referring now to FIG. 5, FIG. 5 is a diagram of a non-limiting embodiment of optical waveguide interferometer 500. In some non-limiting embodiments, optical waveguide interferometer 500 may be the same as or similar to optical waveguide interferometer 100, optical waveguide interferometer 300 (e.g., one or more stages of optical waveguide interferometer 300), or optical waveguide interferometer 400 (e.g., one or more stages of optical waveguide interferometer 400). For example, optical waveguide interferometer 500 may include the same or similar components as optical waveguide interferometer 100, as described with regard to FIG. 1, optical waveguide interferometer 300, as described with regard to FIG. 3, or optical waveguide interferometer 400, as described with regard to FIG. 4.

As shown in FIG. 5, optical waveguide interferometer 500 may include input section 502, middle section 504, and output section 506. As further shown in FIG. 5, optical waveguide interferometer 500 may include a short arm portion, referred to as first arm portion 508, that spans input section 502, middle section 504, and output section 506, and a long arm portion, referred to as second arm portion 510, that spans input section 502, middle section 504, and output section 506. As further shown in FIG. 5, first arm portion 508 may include first span 524a and second span 524b. As further shown in FIG. 5, second arm portion 510 may include first span 526a and second span 526b.

In some non-limiting embodiments, first span 524a of first arm portion 508 may have a width that is different than a width of second span 524b of first arm portion 508. In one example, first span 524a of first arm portion 508 may have a width that is larger than a width of second span 524b of first arm portion 508. In another example, first span 524a of first arm portion 508 may have a width that is smaller than a width of second span 524b of first arm portion 508. In some non-limiting embodiments, first span 524a of first arm portion 508 may have a length that is different than a length of second span 524b of first arm portion 508. In one example, first span 524a of first arm portion 508 may have a length that is larger than a length of second span 524b of first arm portion 508. In another example, first span 524a of first arm portion 508 may have a length that is smaller than a length of second span 524b of first arm portion 508. In some non-limiting embodiments, first span 524a of first arm portion 508 may have a length that is equal to a length of second span 524b of first arm portion 508.

In some non-limiting embodiments, first span 524a and second span 524b of first arm portion 508 may be positioned in the same section of first arm portion 508. For example, first span 524a and second span 524b of first arm portion 508 may be positioned in middle section 504 of optical waveguide interferometer 500. In some non-limiting embodiments, first span 524a and second span 524b of first arm portion 508 may be positioned in different sections of first arm portion 508. For example, first span 524a of first arm portion 508 may be positioned in input section 502 of optical waveguide interferometer 500, and second span 524b may be positioned in middle section 504 of optical waveguide interferometer 500.

In some non-limiting embodiments, first span 526a of second arm portion 510 may have a width that is different than a width of second span 526b of second arm portion 510. In one example, first span 526a of second arm portion 510 may have a width that is larger than a width of second span 526b of second arm portion 510. In another example, first span 526a of second arm portion 510 may have a width that is smaller than a width of second span 526b of second arm portion 510. In some non-limiting embodiments, first span 526a of second arm portion 510 may have a length that is different than a length of second span 526b of second arm portion 510. In one example, first span 526a of second arm portion 510 may have a length that is larger than a length of second span 526b of second arm portion 510. In another example, first span 526a of second arm portion 510 may have a length that is smaller than a length of second span 526b of second arm portion 510. In some non-limiting embodiments, first span 526a of second arm portion 510 may have a length that is equal to a length of second span 526b of second arm portion 510.

In some non-limiting embodiments, first span 526a and second span 526b of first arm portion 508 may be positioned in the same section of first arm portion 508. For example, first span 526a and second span 526b of second arm portion 510 may be positioned in middle section 504 of optical waveguide interferometer 500. In some non-limiting embodiments, first span 526a and second span 526b of second arm portion 510 may be positioned in different sections of first arm portion 508. For example, first span 526a of second arm portion 510 may be positioned in input section 502 of optical waveguide interferometer 500, and second span 526b may be positioned in middle section 504 of optical waveguide interferometer 500.

In some non-limiting embodiments, first span 524a and/or second span 524b of first arm portion 508 may have a width that is different than a width of first span 526a and/or second span 526b of second arm portion 510. In one example, first span 524a and/or second span 524b of first arm portion 508 may have a width that is larger than a width of first span 526a and/or second span 526b of second arm portion 510. In another example, first span 524a and/or second span 524b of first arm portion 508 may have a width that is smaller than a width of first span 526a and/or second span 526b of second arm portion 510.

In some non-limiting embodiments, first span 524a and/or second span 524b of first arm portion 508 may have a length that is different than a length of first span 526a and/or second span 526b of second arm portion 510. In one example, first span 524a and/or second span 524b of first arm portion 508 may have a length that is larger than a length of first span 526a and/or second span 526b of second arm portion 510. In another example, first span 524a and/or second span 524b of first arm portion 508 may have a length that is smaller than a length of first span 526a and/or second span 526b of second arm portion 510. In some non-limiting embodiments, first span 524a and/or second span 524b of first arm portion 508 may have a length that is equal to a length of first span 526a and/or second span 526b of second arm portion 510.

In some non-limiting embodiments, first span 524a and/or second span 524b of first arm portion 508 may be positioned in the same section of optical waveguide interferometer 500 as first span 526a and/or second span 526b of second arm portion 510. For example, first span 524a and/or second span 524b of first arm portion 508 and first span 526a and/or second span 526b of second arm portion 510 may be positioned in middle section 504 of optical waveguide interferometer 500. In some non-limiting embodiments, first span 524a and/or second span 524b of first arm portion 508 may be positioned in different sections of optical waveguide interferometer 500 as compared to first span 526a and/or second span 526b of second arm portion 510. For example, first span 524a and/or second span 524b of first arm portion 508 may be positioned in input section 502 of optical waveguide interferometer 500, and first span 526a and/or second span 526b of second arm portion 510 may be positioned in middle section 504 of optical waveguide interferometer 500.

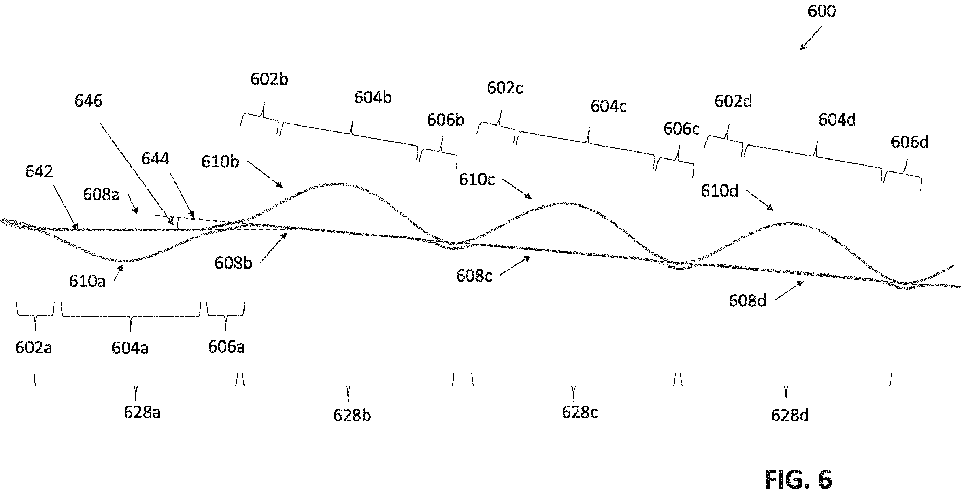

Referring now to FIG. 6, FIG. 6 is a diagram of a non-limiting embodiment of optical waveguide interferometer 600. As shown in FIG. 6, optical waveguide interferometer 600 may include first stage 628a, second stage 628b, third stage 628c, and fourth stage 628d. In some non-limiting embodiments, one or more stages of first stage 628a, second stage 628b, third stage 628c, and fourth stage 628d may be the same as or similar to optical waveguide interferometer 100, optical waveguide interferometer 300 (e.g., one or more stages of optical waveguide interferometer 300), optical waveguide interferometer 400 (e.g., one or more stages of optical waveguide interferometer 400), or optical waveguide interferometer 500 (e.g., one or more stages of optical waveguide interferometer 500). For example, one or more stages of first stage 628a, second stage 628b, third stage 628c, and fourth stage 628d may include the same or similar components as optical waveguide interferometer 100, as described with regard to FIG. 1, optical waveguide interferometer 300, as described with regard to FIG. 3, optical waveguide interferometer 400, as described with regard to FIG. 4, or optical waveguide interferometer 500, as described with regard to FIG. 5.

As further shown in FIG. 6, optical waveguide interferometer 600 may include first stage 628a, second stage 628b, third stage 628c, and fourth stage 628d connected together. For example, first stage 628a is connected to second stage 628b, second stage 628b is connected to third stage 628c, and third stage 628c is connected to fourth stage 628d in series. In some non-limiting embodiments, one or more stages of first stage 628a, second stage 628b, third stage 628c, and fourth stage 628d may be connected together in the same or similar fashion as first stage 328a, second stage 328b, and third stage 328c of optical waveguide interferometer 300. In some non-limiting embodiments, one or more stages of first stage 628a, second stage 628b, third stage 628c, and fourth stage 628d may be sized and configured in the same fashion. For example, first stage 628a, second stage 628b, third stage 628c, and fourth stage 628d may have the same size and configuration.

As further shown in FIG. 6, first stage 628a may include first input section 602a, first middle section 604a, and first output section 606a; second stage 628b may include second input section 602b, second middle section 604b, and second output section 606b; third stage 628c may include third input section 602c, third middle section 604c, and third output section 606c; and fourth stage 628d may include fourth input section 602d, fourth middle section 604d, and fourth output section 606d. As further shown in FIG. 6, stages 628a-628d may include first arm portions 608a-608d and second arm portions 610a-610d, respectively. As further shown in FIG. 6, first output section 606a of first stage 628a may be connected to (e.g., coupled to) second input section 602b of second stage 628b, second output section 606b of second stage 628b may be connected to third input section 602c of third stage 628c, and third output section 606c of third stage 628c may be connected to fourth input section 602d of fourth stage 628d. Additional stages may be connected in the same or similar fashion.

As further shown in FIG. 6, first output section 606a of first stage 628a may be configured to be in parallel with second input section 602b of second stage 628b. As further shown in FIG. 6, first axis 642 is shown as being along (e.g., concentric with) first arm portion 608a of first stage 628a and second axis 644 is shown as being along first arm portion 608b of second stage 628b. In some non-limiting embodiments, first stage angle 646 may be defined by first axis 642 and second axis 644. In some non-limiting embodiments, first stage angle 646 may provide a degree of alignment between first stage 628a and second stage 628b.

In some non-limiting embodiments, one or more stages of optical waveguide interferometer 600 maybe configured to be linearly aligned. For example, as further shown in FIG. 6, first axis 642 is shown as being along (e.g., concentric with) first arm portion 608b of second stage 628b, first arm portion 608c of third stage 628c, and first arm portion 608d of fourth stage 628d. In this way, second stage 628b, third stage 628c, and fourth stage 628d may be linearly aligned to provide a desired form factor.

As further shown in FIG. 6, second output section 606b of second stage 628b may be configured to not be in parallel with third input section 602c of third stage 628c and third output section 606c of third stage 628c may be configured to not be in parallel with fourth input section 602d of fourth stage 628d. By having output sections of stages configured to not be in parallel with input sections of further stages, the design of optical waveguide interferometer 600 may reduce or eliminate a net rotation bending based on increasing a number of stages and straightening the design of optical waveguide interferometer 600. Additionally, this may also show a relatively wavelength-independent optical tap ratio for particular applications, such as a lattice filter.

## Claims

1. An optical waveguide interferometer, comprising:
an input section;
a middle section;
an output section;
a first arm portion having a first length that spans the input section, the middle section, and the output section; and
a second arm portion having a second length that spans the input section, the middle section, and the output section;
wherein the first length of the first arm portion is less than the second length of the second arm portion; and
wherein the second arm portion has a curved shape.

2. The optical waveguide interferometer of claim 1, wherein the first arm portion has a first bend at a transition of the first arm portion between the input section and the middle section; and
wherein the second arm portion has a second bend at a transition of the second arm portion between the input section and the middle section.

3. The optical waveguide interferometer of claim 2, wherein the first arm portion has a third bend at a transition of the first arm portion between the middle section and the output section; and
wherein the second arm portion has a fourth bend at a transition of the second arm portion between the middle section and the output section.

4. The optical waveguide interferometer of claim 3, wherein a first angle is defined by the first arm portion after the first bend at the transition of the first arm portion between the input section and the middle section and the second arm portion at the transition of the second arm portion between the input section and the middle section after the second bend; and
wherein a second angle is defined by the first arm portion before the third bend at the transition of the first arm portion between the middle section and the output section and the second arm portion before the fourth bend at the transition of the second arm portion between the middle section and the output section; and
wherein the first angle and the second angle are equal.

5. The optical waveguide interferometer of claim 1, wherein the first arm portion has a first bend at a transition of the first arm portion between the input section and the middle section; and
wherein the first arm portion extends in a straight line to a third bend at a transition between the middle section and the output section.

6. The optical waveguide interferometer of claim 1, wherein the first arm portion at the input section is parallel to the second arm portion at the input section.

7. The optical waveguide interferometer of claim 1, wherein the first arm portion at the output section is parallel to the second arm portion at the output section.

8. The optical waveguide interferometer of claim 1, wherein the first arm portion has a first bend at a transition of the first arm portion between the input section and the middle section;
wherein the second arm portion has a second bend at a transition of the second arm portion between the input section and the middle section; and
wherein the first arm portion before the first bend at the input section is parallel to the second arm portion before the second bend at the input section.

9. The optical waveguide interferometer of claim 8, wherein the first arm portion has a third bend at a transition of the first arm portion between the middle section and the output section;
wherein the second arm portion has a fourth bend at a transition of the second arm portion between the middle section and the output section; and
wherein the first arm portion after the third bend at the output section is parallel to the second arm portion after the fourth bend at the output section.

10. The optical waveguide interferometer of claim 1, wherein a span of the first arm portion in the middle section has a width that is different than a width of a span of the second arm portion in the middle section.

11. The optical waveguide interferometer of claim 1, wherein a first span of the first arm portion in the middle section has a width that is different than a width of a second span of the first arm portion in the middle section.

12. The optical waveguide interferometer of claim 1, wherein a first span of the second arm portion in the middle section has a width that is different than a width of a second span of the second arm portion in the middle section.

13. The optical waveguide interferometer of claim 1, wherein the input section is a first input section of a first stage, wherein the middle section is a first middle section of the first stage, and wherein the output section is a first output section of the first stage, and the optical waveguide interferometer further comprises:
a second stage, wherein the second stage comprises:
a second input section;
a second middle section;
a second output section; and
wherein the first output section of the first stage is coupled to the second input section of the second stage.

14. An optical waveguide interferometer, comprising:
a first stage comprising:
a first input section;
a first middle section; and
a first output section;
wherein the first stage further comprises:
a first short arm portion that spans the first input section, the first middle section, and the first output section; and
a first long arm portion that spans the first input section, the first middle section, and the first output section;
wherein a span of the first short arm portion in the first middle section is shorter than a span of the first long arm portion in the first middle section; and
wherein the first long arm portion has a first curved shape;
a second stage comprising:
a second input section;
a second middle section; and
a second output section;
wherein the second stage further comprises:
a second short arm portion that spans the second input section, the second middle section, and the second output section; and
a second long arm portion that spans the second input section, the second middle section, and the second output section;
wherein a span of the second short arm portion in the second middle section is shorter than a span of the second long arm portion in the second middle section;
wherein the second long arm portion has a second curved shape; and
wherein the first output section of the first stage is coupled to the second input section of the second stage.

15. The optical waveguide interferometer of claim 14, wherein the first short arm portion has a first bend at a transition of the first short arm portion between the first input section and the first middle section;
wherein the first long arm portion has a second bend at a transition of the first long arm portion between the first input section and the first middle section;
wherein the first short arm portion has a third bend at a transition of the first short arm portion between the first middle section and the first output section;
wherein the first long arm portion has a fourth bend at a transition of the first long arm portion between the first middle section and the first output section;
wherein a first angle is defined by the first short arm portion after the first bend and the first long arm portion after the second bend;
wherein a second angle is defined by the first short arm portion before the third bend and the first long arm portion before the fourth bend;
wherein the first angle and the second angle are equal;
wherein the second short arm portion has a fifth bend at a transition of the second short arm portion between the second input section and the second middle section;
wherein the second long arm portion has a sixth bend at a transition of the second long arm portion between the second input section and the second middle section;
wherein the second short arm portion has a seventh bend at a transition of the second short arm portion between the second middle section and the second output section;
wherein the second long arm portion has an eighth bend at a transition of the second long arm portion between the second middle section and the second output section;
wherein a third angle is defined by the second short arm portion after the fifth bend and the second long arm portion after the sixth bend;
wherein a fourth angle is defined by the second short arm portion before the seventh bend and the second long arm portion before the eighth bend; and
wherein the third angle and the fourth angle are equal.

16. The optical waveguide interferometer of claim 14, wherein the first short arm portion has a first bend at a transition of the first short arm portion between the first input section and the first middle section;
wherein the first short arm portion extends in a straight line to a third bend at a transition between the first middle section and the first output section;
wherein the second short arm portion has a fifth bend at a transition of the second short arm portion between the second input section and the second middle section; and
wherein the second short arm portion extends in a straight line to a seventh bend at a transition between the second middle section and the second output section.

17. The optical waveguide interferometer of claim 14, wherein a span of the first short arm portion in the first middle section has a width that is different than a width of a span of the first long arm portion in the first middle section; and
wherein a span of the second short arm portion in the second middle section has a width that is different than a width of a span of the second long arm portion in the second middle section.

18. The optical waveguide interferometer of claim 14, wherein a first span of the first short arm portion in the first middle section has a width that is different than a width of a second span of the first short arm portion in the first middle section; and
wherein a third span of the second short arm portion in the second middle section has a width that is different than a width of a fourth span of the second short arm portion in the second middle section.

19. The optical waveguide interferometer of claim 14, wherein a first span of the first long arm portion in the first middle section has a width that is different than a width of a second span of the first long arm portion in the first middle section; and
wherein a third span of the second long arm portion in the second middle section has a width that is different than a width of a fourth span of the second long arm portion in the second middle section.

20. An optical waveguide interferometer, comprising:
a first stage comprising:
a first input section;
a first middle section; and
a first output section;
wherein the first stage further comprises:
a first short arm portion that spans the first input section, the first middle section, and the first output section; and
a first long arm portion that spans the first input section, the first middle section, and the first output section;
wherein a span of the first short arm portion in the first middle section is shorter than a span of the first long arm portion in the first middle section; and
wherein the first long arm portion has a first curved shape;
a second stage comprising:
a second input section;
a second middle section; and
a second output section;
wherein the second stage further comprises:
a second short arm portion that spans the second input section, the second middle section, and the second output section; and
a second long arm portion that spans the second input section, the second middle section, and the second output section;
wherein a span of the second short arm portion in the second middle section is shorter than a span of the second long arm portion in the second middle section;
wherein the second long arm portion has a second curved shape;
wherein the first output section of the first stage is coupled to the second input section of the second stage; and
wherein the first output section of the first stage is not parallel to the second input section of the second stage.
